# EUROPÄISCHE PATENTSCHRIFT

(11) **EP 3 568 901 B1**
(45) Veröffentlichungstag und Bekanntmachung des Hinweises auf die Patenterteilung: **15.06.2022**
(21) Anmeldenummer: 18704421.9
(22) Anmeldetag: 22.01.2018
(51) Int. Cl.: H02K 9/19, H02K 9/20, H02K 9/193

(54) **ELEKTRISCHE ROTIERENDE MASCHINE**
ELECTRICALLY ROTATING MACHINE
MACHINE ÉLECTRIQUE ROTATIVE

(30) Priorität: 17.02.2017 EP 17156700
(43) Veröffentlichungstag der Anmeldung: 20.11.2019
(73) Patentinhaber: Siemens Aktiengesellschaft, 80333 München (DE)
(72) Erfinder: ZEGENHAGEN, Mark Tobias, 10115 Berlin (DE)
(86) Internationale Anmeldenummer: PCT/EP2018/051421
(87) Internationale Veröffentlichungsnummer: WO 2018/149588

(56) Entgegenhaltungen:
- SU-A1- 551 763
- US-A- 2 604 500

## Beschreibung

Die Erfindung betrifft eine elektrische rotierende Maschine mit einem Rotor und einem Stator.

Darüber hinaus betrifft die Erfindung ein Verfahren zur Kühlung einer elektrischen rotierenden Maschine mit einem Rotor und einem Stator.

Verluste in derartigen elektrischen rotierenden Maschinen, beispielsweise Motoren und Generatoren, insbesondere in stromdurchflossenen Wicklungen, Dynamoblechkörpern und massiven Eisenteilen, werden in Wärme umgesetzt und erwärmen die Maschinenbauteile. Zweck einer Maschinenkühlung ist das Abführen der auftretenden Verlustwärmeströme an die Umgebung, um Bauteiltemperaturgrenzen nicht zu überschreiten. Darüber hinaus beeinflussen die Kühlung bzw. die sich einstellenden Betriebstemperaturen den Maschinenwirkungsgrad, die Maschinenausnutzung, die Fertigungskosten und gegebenenfalls, insbesondere bei permanenterregten Maschinen, die Materialkosten. Ferner werden durch die Wahl des Kühlverfahrens bei geschlossenem Kühlkreislauf die Größe des Rückkühlwerks, die volumetrische und gravimetrische Leistungsdichte und die Kosten der gesamten Maschine, insbesondere des Rückkühlwerks, skaliert.

Die fortschreitende Drehmomenten- bzw. Leistungsdichtesteigerung von elektrischen Großmaschinen mit Nennleistungen im Megawattbereich wird vorrangig durch kühltechnische Maßnahmen begrenzt, da die Volumina der Verlustquellen kubisch, deren wärmeabführende Flächen jedoch nur quadratisch ansteigen.

Stand der Technik sind sensible Kühlkonzepte (ohne Verdampfung) mit Luft, insbesondere bei Umgebungsdruck bzw. in Sonderfällen mit Gasen wie Helium oder Wasserstoff bei Drücken über dem Umgebungsdruck, um im Vergleich mit Luft günstigere Wärmekapazitäten und Wärmeübergangskoeffizienten bei gleichzeitig geringeren Ventilationsverlusten zu nutzen. Darüber hinaus werden elektrische rotierende Maschinen mit gesteigertem Aufwand in verschiedenen Ausführungen sensibel mit Wasser oder Ölen gekühlt. Die beschriebene Erfindung zielt vorrangig auf eine Verbesserung der sensiblen Kühlkonzepte, bei denen die Bauteile in direktem Kontakt mit Luft in einem geschlossenen Kreislauf gekühlt und die dabei von der Luft aufgenommene Wärme in der Folge in einem Luft-Wasser- oder Luft-Luft-Wärmeübertrager an die Umgebung abgegeben wird, ohne die Systemkomplexität signifikant zu erhöhen.

Ein merkliches Potenzial zur Steigerung der volumetrischen Maschinenleistungsdichte liegt in der Verringerung der für den Luftstrom benötigten Strömungsquerschnitte durch die Steigerung der Wärmeaufnahmefähigkeit des Kühlmittels, zum anderen in der Verringerung der Wärmeübertragerflächen durch die Erhöhung des Wärmeübergangs bei Wärmeabgabe an das externe Kühlfluid, beispielsweise Wasser oder Luft.

Um das beschriebene primäre Ziel der Leistungsdichtesteigerung ebenso wie die sekundären Ziele zu erreichen, müssen also insbesondere folgende zwei Anforderungen von einer effizienteren, innovativen Kühlung erfüllt werden:
- eine deutliche Steigerung des Wärmeübergangs von der zu kühlenden Bauteiloberfläche zum Kühlmedium bzw. die Verringerung des Konvektionswiderstands im Vergleich zur Luft und
- eine deutliche Steigerung der Wärmeaufnahmefähigkeit des Kühlmediums im Vergleich zur Luft.

Die Patentschrift US 3,648,085 beschreibt ein Verfahren und eine Vorrichtung zum Kühlen der wärmeerzeugenden elektrischen Wicklungen einer dynamoelektrischen Maschine, indem sie direkt mit einem zerstäubten Kühlmittel besprüht werden, sodass ein Film aus flüssigem Kühlmittel abgeschieden wird, der beim Abfließen die aufgenommene Wärme abführt.

Die Patentschrift US 2,604,500 beschreibt ein Kühlsystem für elektrische Motoren und Generatoren mittels Sprühkühlung, wobei das verdampfte Kühlmittel in einem Raum durch einen Wärmetauscher kondensiert. Eine Vakuumpumpe reguliert den Druck in der Kammer.

Die Offenlegungsschrift SU 551 763 A1 beschreibt eine komplett gekapselte Maschine, welche mit Hilfe von Verdampfungskühlung gekühlt wird. Das verdampfte Kühlmittel kondensiert an einer inneren Oberfläche des Gehäuses der Maschine.

Der Erfindung liegt die Aufgabe zugrunde, eine elektrische rotierende Maschine anzugeben, die einfach und effizient nahe des Umgebungsdrucks gekühlt wird.

Diese Aufgabe wird erfindungsgemäß durch eine elektrische rotierende Maschine mit einem Rotor, einem Stator und einem den Rotor und den Stator umgebenden geschlossenen Maschinengehäuse gelöst, wobei die elektrische rotierende Maschine Mittel zur Verdampfungskühlung von zumindest einem Teil des Stators und/oder des Rotors mit einem Verdampfungskühlmittel aufweist und wobei die elektrische rotierende Maschine Mittel zur Mischkondensation des verdampften Verdampfungskühlmittels mit einem flüssigen Kondensationskühlmittel in einem Mischkondensationsraum aufweist, wobei sich der Mischkondensationsraum innerhalb des Maschinengehäuses an den Stator anschließt, wobei der Mischkondensationsraum einen Abscheider aufweist, welcher auf einer dem Stator zugewandten Seite des Mischkondensationsraums angeordnet ist, wobei durch den Abscheider der Mischkondensationsraum von den zu kühlenden Bauteilen der elektrischen rotierenden Maschine abgegrenzt ist, wobei so keine verdampfungsseitig eingebrachte Kühlmittelflüssigkeit unkontrolliert in den Mischkondensationsraum gelangt, sondern lediglich der gasförmige Kühlmittelstrom in den Mischkondensationsraum strömt.

Darüber hinaus wird die Aufgabe erfindungsgemäß durch ein Verfahren zur Kühlung einer elektrischen rotierenden Maschine mit einem Rotor, einem Stator und einem den Rotor und den Stator umgebenden geschlossenen Maschinengehäuse gelöst, wobei zumindest ein Teil des Stators und/oder des Rotors mit einem Verdampfungskühlmittel über eine Verdampfungskühlung gekühlt wird und wobei das verdampfte Verdampfungskühlmittel mit Hilfe eines flüssigen Kondensationskühlmittels über eine Mischkondensation in einem Mischkondensationsraum wieder in einen flüssigen Aggregatszustand überführt wird, wobei sich der Mischkondensationsraum innerhalb des Maschinengehäuses an den Stator anschließt, wobei der Mischkondensationsraum einen Abscheider (18) aufweist, welcher auf einer dem Stator zugewandten Seite des Mischkondensationsraums angeordnet ist. wobei durch den Abscheider der Mischkondensationsraum von den zu kühlenden Bauteilen der elektrischen rotierenden Maschine abgegrenzt wird, wobei so keine verdampfungsseitig eingebrachte Kühlmittelflüssigkeit unkontrolliert in den Mischkondensationsraum gelangt, sondern lediglich der gasförmige Kühlmittelstrom in den Mischkondensationsraum strömt.

Die in Bezug auf die elektrische rotierende Maschine nachstehend angeführten Vorteile und bevorzugten Ausgestaltungen lassen sich sinngemäß auf das Kühlverfahren übertragen.

Die Erfindung basiert auf der Idee, Luft als ineffizientes Wärmeübertragungsmedium bei elektrischen Maschinen mit geschlossenem internem Luftkreislauf zu substituieren, um höhere Wärmeübergangskoeffizienten und damit geringere Kühlmittelerwärmung und geringere Kühlmittelvolumenströme zu erzielen. Das alternative Kühlverfahren beruht auf dem Versprühen und Verdampfen, d.h. einem Phasenwechsel, eines Verdampfungskühlmittels und einer anschließenden Kondensation des Kühlmitteldampfes des Verdampfungskühlmittels mit einem Kondensationskühlmittel in Form einer Mischkondensation in räumlicher Nähe zu den Wärmequellen. Die Mischkondensation findet in Anwesenheit von nicht kondensierbaren Gasen, insbesondere Umgebungsluft, durch einen direkten Kontakt mit dem Kondensationskühlmittel unterhalb der Taupunkttemperatur des Kühlmittels, d.h. mit ausreichender Unterkühlung, nahe eines Umgebungsdrucks statt. Durch die Mischkondensation wird die hemmende Wirkung von in der Maschine befindlichen Inertgasen auf die Kondensation des Kühlmittels vermieden. Als Kühlmittel werden aufgrund ihrer günstigen dielektrischen Eigenschaften beispielsweise Öle, insbesondere niedrigviskose Silikonöle wie Baysilone oder Midelöle, verwendet.

Insbesondere durch das Versprühen eines Kühlmittels in den Mischkondensationsraum wird die hemmende Wirkung von in der Maschine befindlichen Inertgasen auf die Kondensation des Kühlmittels vermieden, wodurch eine effiziente Kühlung mit geringer Komplexität erreicht wird.

Durch die Verdampfungskühlung werden, insbesondere im Vergleich zu einer reinen sensiblen Kühlung, höhere Wärmeübergangskoeffizienten ermöglicht. Durch die Mischkondensation wird eine Kondensation in Anwesenheit von Inertgasen, insbesondere Luft, nahe des Umgebungsdrucks ermöglicht, indem die hemmende Wirkung von Inertgasen durch Durchmischung vermieden wird.

In einer bevorzugten Ausführungsform umfassen die Mittel zur Verdampfungskühlung mindestens eine Vorrichtung zur Erzeugung eines Kühlmittelnebels, insbesondere eine Verdüsungsvorrichtung. Durch die Verwendung einer Verdüsungsvorrichtung, insbesondere einer Düse, wird eine optimale Benetzung der zu kühlenden Bauteile beziehungsweise lokal stark konzentrierten Wärmequellen mit vergleichsweise geringer Komplexität erzielt.

In einer weiteren vorteilhaften Ausgestaltung umfassen die Mittel zur Mischkondensation mindestens eine Vorrichtung zur Erzeugung eines Kühlmittelnebels, insbesondere eine Verdüsungsvorrichtung. Durch die Verwendung einer Verdüsungsvorrichtung, insbesondere einer Düse, beispielsweise in einem Mischkondensationsraum, ist durch das Versprühen des Kühlmittels die zur Wärmeübertragung zur Verfügung stehende Oberfläche hoch und das versprühte Kühlmittel sorgt für eine gute Durchmischung.

Die Mittel zur Mischkondensation sind zumindest teilweise in einem Mischkondensationsraum angeordnet. Der Mischkondensationsraum ist von den durch Verlustwärme aufgewärmten aktiven Bauteilen der elektrischen Maschine abgegrenzt, so dass keine Kühlmittelflüssigkeit unkontrolliert in den Mischkondensationsraum gelangt, sondern lediglich der gasförmige Kühlmittelstrom in den Mischkondensationsraum strömt, sodass die Verdampfungskühlung und die Mischkondensation im Wesentlichen räumlich abgegrenzt voneinander ablaufen.

In einer bevorzugten Ausführungsform ist im Mischkondensationsraum ein Wärmeübertrager angeordnet. Insbesondere ist der Wärmeübertrager als Rekuperator ausgeführt, dessen Stoffströme räumlich durch eine wärmedurchlässige Wand getrennt sind und eine Wärmeübertragung ohne direkten Kontakt von Kühlmittel und Rückkühlmedium ermöglichen. Zusätzlich zur Mischkondensation findet mit Hilfe des Wärmeübertragers eine konventionelle Filmkondensation im Mischkondensationsraum statt.

Vorteilhaft ist der Wärmeübertrager als Rohrbündelwärmeübertrager oder Plattenwärmeübertrager ausgestaltet. Ein Rohrbündelwärmeübertrager weist eine Vielzahl von, insbesondere parallelen, Rohren auf, die mit einem Kühlfluid durchströmt sind. Ein Plattenwärmeübertrager weist eine Vielzahl von, insbesondere parallelen, Platten auf, die mit einem Kühlfluid durchströmt sind. Rohrbündelwärmeübertrager und Plattenwärmeübertrager weisen eine große Oberfläche zur Wärmeübertragung, beispielsweise mit Rippen und/oder Lamellen auf, und sind deshalb sehr platzsparend ausgeführt, wodurch sie die Mischkondensation optimal ergänzen.

In einer weiteren vorteilhaften Ausgestaltung ist im Mischkondensationsraum ein Füllkörper angeordnet. Insbesondere ist der Füllkörper als eine strukturierte Packung ausgeführt, die beispielswiese aus dünnen, gewellten und gelochten Metallplatten bzw. Drahtnetzen aufgebaut ist, wodurch ein optimaler Austausch zwischen der flüssigen Phase des Kondensationskühlmittels und der gasförmigen Phase des Verdampfungskühlmittels bei minimalem Druckwiderstand gewährleistet ist. Der Füllkörper erhöht die Verweilzeit des Kondensationskühlmittels im Kondensationsraum, und erhöht dadurch die Menge an Kühlmitteldampf, der in der Mischkondensation kondensiert wird.

In einer weiteren Ausführungsform ist der Wärmeübertrager im Füllkörper angeordnet. Durch eine derartige Anordnung wird sehr platzsparend eine Kombination aus Mischkondensation und Filmkondensation, das heißt eine Mischung aus einer adiabaten und einer isothermen Wärmeabfuhr, erreicht. Ferner werden der Bereich der Verdampfungskühlung und der Mischkondensationsraum platzsparend und günstig für die Wärmeübertragung voneinander abgegrenzt.

Der Mischkondensationsraum weist einen Abscheider auf, welcher auf einer dem Stator zugewandten Seite des Mischkondensationsraums angeordnet ist. Insbesondere ist der Abscheider in Form von geschlitzten Trennblechen, Umlenkblechen oder alternativ als Füllkörper ausgestaltet. Durch den Abscheider wird der Mischkondensationsraum von den zu kühlenden Bauteilen der elektrischen rotierenden Maschine abgegrenzt, so dass keine verdampfungsseitig eingebrachte Kühlmittelflüssigkeit unkontrolliert in den Mischkondensationsraum gelangt, sondern lediglich der gasförmige Kühlmittelstrom in den Mischkondensationsraum strömt. Ferner leitet der Abscheider die kondensierte Kühlflüssigkeit in den Sammler ab.

Vorteilhaft weist die Verdüsungsvorrichtung zumindest eine Vollkegeldüse auf. Durch eine Vollkegeldüse wird eine große Oberfläche sehr gleichmäßig und homogen benetzt.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine mit einer ersten Ausgestaltung eines Kühlkonzepts,
- FIG 2: einen Längsschnitt einer elektrischen rotierenden Maschine mit einer zweiten Ausgestaltung eines Kühlkonzepts,
- FIG 3: einen Längsschnitt einer elektrischen rotierenden Maschine mit einer dritten Ausgestaltung eines Kühlkonzepts und
- FIG 4: einen Längsschnitt einer elektrischen rotierenden Maschine mit einer vierten Ausgestaltung eines Kühlkonzepts.

Gleiche Bezugszeichen haben in den verschiedenen Figuren die gleiche Bedeutung.

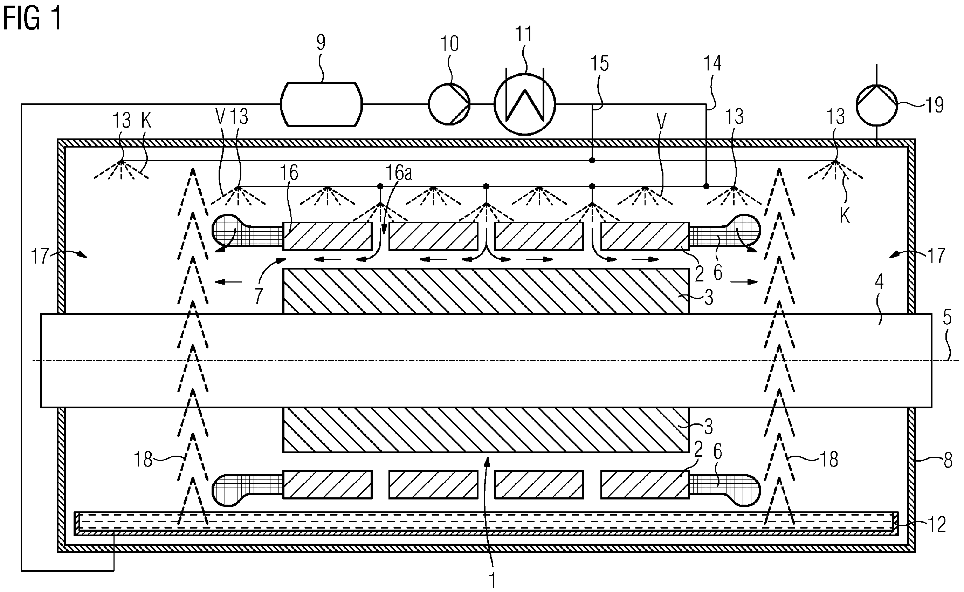

FIG 1 zeigt einen Längsschnitt einer elektrischen rotierenden Maschine 1 mit einer ersten Ausgestaltung eines Kühlkonzepts zur Verdampfungskühlung mit Mischkondenation. Die elektrische rotierende Maschine 1 weist einen Stator 2 und einen Rotor 3 auf, wobei der Rotor 3 eine Welle 4 aufweist und um eine Rotationsachse 5 drehbar ist. Der Stator weist Wickelköpfe 6 auf. Zwischen Stator 2 und Rotor 3 befindet sich ein Spalt 7, der insbesondere als ein Luftspalt ausgeführt ist. Die elektrische rotierende Maschine 1 ist in einem geschlossenen Maschinengehäuse 8 eingebaut.

Das Konzept zur Kühlung des Stators 2 und des Rotors 3 der elektrischen rotierenden Maschine 1 sieht ein Versprühen und Verdampfen eines Verdampfungskühlmittels V und anschließend eine Mischkondensation des verdampften Verdampfungskühlmittels V mit einem Kondensationskühlmittel K vor, wobei insbesondere das Verdampfungskühlmittel V und Kondensationskühlmittel K identisch sind. Als Kühlmittel werden aufgrund ihrer günstigen dielektrischen Eigenschaften beispielsweise Öle, insbesondere niedrigviskose Silikonöle wie Baysilone oder Midelöle, verwendet.

Die elektrische rotierende Maschine 1 umfasst zur Realisierung des Kühlkonzepts mit ausreichender Dynamik einen Kühlmittelbehälter 9, zur Umwälzung des flüssigen Kühlmittels und zum Druckaufbau eine Kühlmittelpumpe 10 und einen Wärmeübertrager 11, der als Kühlmittel-Wasser-Wärmeübertrager oder Kühlmittel-Luft-Wärmeübertrager ausgeführt ist. Der Wärmeübertrager 11 ist innerhalb oder außerhalb der elektrischen rotierenden Maschine 1 angeordnet. Ferner weist die elektrische rotierende Maschine 1 Verdüsungsvorrichtungen 13, auch Sprühvorrichtungen genannt, für das Versprühen des kalten flüssigen Kühlmittels und einen Sammler 12 zum Auffangen des aufgewärmten kondensierten Kühlmittels auf.

Das warme flüssige Kühlmittel, welches beispielsweise aus dem Sammler 12 stammt, wird aus dem Kühlmittelbehälter 9 mittels der Kühlmittelpumpe 10 durch den Wärmeübertrager 11 gefördert, in dem die von der elektrischen Maschine aufgenommene Verlustwärme an einen externen in FIG 1 nicht dargestellten Fluidkreislauf abgegeben und das warme Kühlmittel dadurch abgekühlt wird. Das abgekühlte Kühlmittel wird auf einen ersten Kühlmittelpfad 14 als Verdampfungskühlmittel V zur Verdampfungskühlung und auf einen zweiten Kühlmittelpfad 15 als Kondensationskühlmittel K zur Mischkondensation aufgeteilt.

Über die Verdüsungsvorrichtungen 13 zur Verdampfungskühlung werden insbesondere ein Statorblechpaket 16 und die Wickelköpfe 6 des Stators 2, sowie der Rotor 3 mit dem Verdampfungskühlmittel V besprüht. Die unterkühlte Kühlmittelflüssigkeit wird insbesondere durch radiale Kühlschlitze 16a im Stator 2 oder andere Ölnebelkanäle auf den Rotor 3 versprüht. Im Kontakt mit durch Verlustwärme aufgewärmten aktiven Bauteilen der elektrischen Maschine 1, insbesondere dem Rotor 3 und dem Stator 2 mit Wickelköpfen 6, wärmt sich das Verdampfungskühlmittel V zunächst sensibel auf, d.h. die Unterkühlung wird abgebaut, bevor eine druckabhängige Sättigungstemperatur erreicht wird und das Verdampfungskühlmittel V bei einer entsprechenden Übertemperatur der Bauteile, beispielsweise 10 K, verdampft. Auf der Oberfläche der aktiven Bauteile kommt es demnach zu einer Filmkühlung in Kombination mit einer Blasenverdampfung, wodurch entsprechend hohe Wärmeübergangskoeffizienten erreicht werden, beispielsweise hundert Mal höher als mittels einer erzwungenen Konvektion mit Luft. Darüber hinaus wird durch das Versprühen des Kühlmittels eine Konvektion in einem Kühlmittelfilm auf den zu kühlenden Bauteilen durch eine Vermischung des Kühlmittels des Kühlmittelfilms mit dem versprühten Kühlmittel gesteigert.

Beim Versprühen des Verdampfungskühlmittels V gilt es durch die mechanische Ausführung der Sprühvorrichtungen 13 mit geeigneten Düsen eine optimale Benetzung der aktiven Bauteile mit dem Kühlmittel, insbesondere einen optimalen Kontakt mit einem durch die Sprühvorrichtungen 13 erzeugten Ölnebel sowie eine hohe Konvektion im benetzenden Kühlmittelfilm zu gewährleisten. Durch einen Phasenwechsel von einem flüssigen in einen gasförmigen Aggregatzustand, also die Verdampfung des Verdampfungskühlmittels V, kommt es durch einen Dichtesprung zu einer plötzlichen Volumenzunahme des versprühten Kühlmittelstroms.

Der nunmehr gasförmige Kühlmittelstrom des Verdampfungskühlmittels V expandiert aufgrund der Druckdifferenzen von den besprühten Bauteilen, insbesondere dem Statorblechpaket 16, den Wickelköpfen 6 und dem Rotor 3, in Richtung der axialen Enden der elektrischen rotierenden Maschine 1 in einen Mischkondensationsraum 17. Der Kühlmittelstrom kann auch durch geschlitzte Trennbleche, die aus Gründen der Übersichtlichkeit in FIG 1 nicht dargestellt sind, in Radialrichtung gelenkt werden. Das Verdampfungskühlmittel V wird über eine geeignete Führung, insbesondere wie in FIG 1 gezeigt, über den Spalt 7 zum Mischkondensationsraum 17 geleitet. Im Mischkondensationsraum 17 ist der Partialdruck des Kühlmittels, insbesondere des Öls, in der Luft aufgrund der geringen Öltemperatur im Vergleich zum Verdampfungsraum geringer. Es können ein oder mehrere Mischkondensationsräume 17 in der elektrischen rotierenden Maschine 1 angeordnet sein. Die beiden Mischkondensationsräume 17 in FIG 1 sind zwischen den axialen Enden des Rotors 3 und den Stirnseiten des Maschinengehäuses 8 angeordnet. Alternativ kann der Mischkondensationsraum 17 radial oberhalb des Stators 2 der elektrischen rotierenden Maschine 1 angeordnet sein. Die Position und Anzahl von Kondensationsräumen 17 ist abhängig von der Konstruktion der elektrischen rotierenden Maschine 1.

Im Mischkondensationsraum 17 wird über Verdüsungsvorrichtungen 13 ein flüssiges unterkühltes Kondensationskühlmittel K fein verteilt und damit mit großer Oberfläche für die Wärmeübertragung versprüht. Der überströmende Kühlmitteldampf des Verdampfungskühlmittels V wird in direktem Kontakt mit dem versprühten Kondensationskühlmittel K unterhalb einer Kühlmediumstaupunkttemperatur kondensiert. Eine derartige Mischkondensation erfolgt ohne eine physische räumliche Trennung des abzukühlenden Verdampfungskühlmittels V und des sich dabei erwärmenden Kondensationskühlmittel K durch eine Mischung. Es ist kein Wärmeübertrager erforderlich, weswegen insbesondere eine Verschmutzung von Wärmeübertragerflächen bei einer Mischkondensation ausgeschlossen ist.

Jeder der Mischkondensationsräume 17 weist einen Abscheider 18, der in FIG 1 in Form von Umlenkblechen ausgestaltet ist, auf. Die Umlenkbleche werden optional mit einem Drahtgestrick kombiniert, das den Teil der elektrischen rotierenden Maschine 1, in dem das Verdampfungskühlmittel V verdampft, vom Mischkondensationsraum 17 abgegrenzt, so dass lediglich der gasförmige Kühlmittelstrom des Verdampfungskühlmittels V in den Mischkondensationsraum 17 strömt. Alternativ ist der Abscheider 18 aus geschlitzten Trennblechen, optional mit einem nachgelagerten Füllkörper, ausgestaltet. Der Abscheider 18 bestimmt darüber hinaus die Führung des gasförmigen Kühlmittelstroms des Verdampfungskühlmittels V zum versprühten Kühlmittelstrom des Kondensationskühlmittels K.

Das bei der Verdampfungskühlung nicht verdampfte Verdampfungskühlmittel V und das während der Mischkondensation verflüssigte Kühlmittel werden im Sammler 12 aufgenommen und durch die Kühlmittelpumpe 10 über den Kühlmittelbehälter 9 wieder zum Wärmeübertrager 11 gefördert, womit sich der Kühlmittelkreis aus Verdampfungskühlung und Mischkondensation schließt. Optional ist vor dem Kühlmittelbehälter 9 ein Filter-Trockner vorgesehen, der in FIG 1 nicht dargestellt ist, um Verschmutzungen und Feuchtigkeit aus dem flüssigen Kühlmittel, insbesondere Öl, zu filtern. Zur Absaugung von Luftanteilen aus dem Maschinengehäuse 8, insbesondere bei Anfahrvorgängen oder zur Absenkung des Systemdrucks und damit der Verdampfungstemperatur, ist optional eine Vakuumpumpe 19 vorgesehen. Durch ein Absaugen der Luft durch die Vakuumpumpe 19 kann der Systemdruck aktiv eingestellt und können die Kondensation hemmende, im Betrieb oder Stillstand in die elektrische Maschine eingedrungene Inertgase aus der Anlage gesaugt werden. Dadurch wird verhindert, dass der Partialdruck des kondensierenden Kühlmitteldampfs durch die Anwesenheit von Inertgasen, hier Luft, zu stark absinkt, wodurch die Kondensationstemperatur, um eine gleichbleibende Wärmeabfuhr zu erreichen, weiter abgesenkt werden müsste.

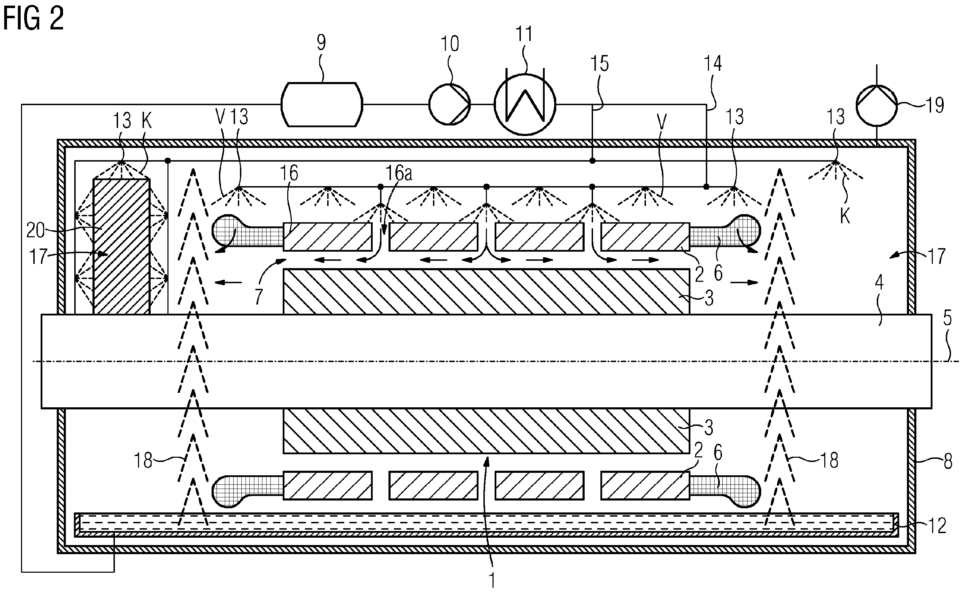

FIG 2 zeigt einen Längsschnitt einer elektrischen rotierenden Maschine 1 mit einer zweiten Ausgestaltung eines Kühlkonzepts zur Verdampfungskühlung mit Mischkondensation. Ein Mischkondensationsraum 17 weist einen Füllkörper 20 auf, der als eine strukturierte Packung ausgeführt ist und die Verweilzeit des Kondensationskühlmittels K im Kondensationsraum erhöht, um die Kontaktzeit des Kühlmitteldampfs mit dem unterkühlten Kühlmittel zu verlängern und damit mehr Kühlmitteldampf zu kondensieren. Die strukturierte Packung ist bevorzugt aus dünnen, gewellten und gelochten Metallplatten bzw. Drahtnetzen aufgebaut, wodurch ein optimaler Austausch zwischen der flüssigen Phase des Kondensationskühlmittels K und der gasförmigen Phase des Verdampfungskühlmittels V bei minimalem Druckwiderstand gewährleistet ist. Um die axiale Länge der elektrischen rotierenden Maschine 1 gering zu halten, ist der Füllkörper 20 seitlich oberhalb der Aktivteile angeordnet. Der Füllkörper 20 kann, wie in FIG 2 gezeigt, auf einer Seite oder auf beiden Seiten in einem Mischkondensationsraum 17 angeordnet werden. Alternativ ist ein Füllkörper 20 in einem Mischkondensationsraum 17 radial oberhalb des Stators 2 der elektrischen rotierenden Maschine 1 angeordnet. Ferner können in einem Mischkondensationsraum 17 mehrere Füllkörper 20 angeordnet sein. Die Verdüsungsvorrichtungen 13 sind insbesondere um den Füllkörper 20 herum angeordnet und besprühen diesen von mehreren Seiten, um die Füllkörper ausreichend zu benetzten. Die weitere Ausführung der elektrischen rotierenden Maschine 1 entspricht der Ausführung in FIG 1.

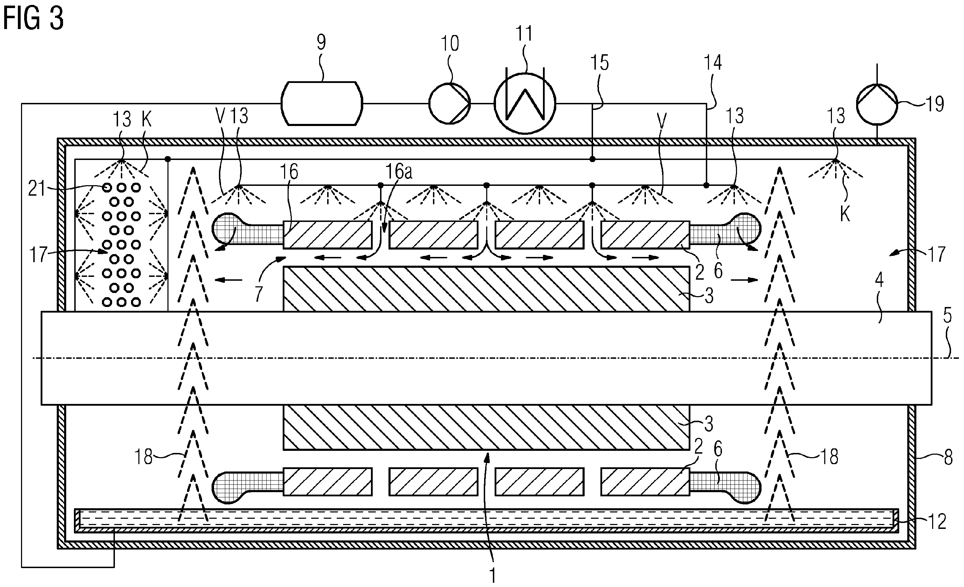

FIG 3 zeigt einen Längsschnitt einer elektrischen rotierenden Maschine 1 mit einer dritten Ausgestaltung eines Kühlkonzepts. Ein Mischkondensationsraum 17 weist einen Wärmeübertrager 21 auf, der als Rohrbündelwärmeübertrager, auch Rekuperator genannt, ausgeführt ist, dessen versetzte Rohre mit Kühlwasser durchströmt sind. Zusätzlich zur Mischkondensation findet im Mischkondensationsraum 17 eine konventionelle Filmkondensation am Wärmeübertrager 21 statt. Der Wärmeübertrager ist alternativ als Plattenwärmeübertrager ausgeführt und weist optional die Fläche zur Wärmeübertragung vergrößernde Strukturen, insbesondere Rippen und/oder Lamellen, auf.

Der Wärmeübertrager 21 ist, wie in FIG 3 gezeigt, auf einer Seite oder auf beiden Seiten in einem Mischkondensationsraum 17 angeordnet. Alternativ ist ein Wärmeübertrager 21 in einem Mischkondensationsraum 17 radial oberhalb des Stators 2 der elektrischen rotierenden Maschine 1 angeordnet. Ferner können in einem Mischkondensationsraum 17 mehrere Wärmeübertrager 21 angeordnet sein. Die Verdüsungsvorrichtungen 13 sind um den Wärmeübertrager 21 herum angeordnet und besprühen diesen von mehreren Seiten. Eine Ansammlung von eine Wärmeübertragung hemmenden Inertgasen wird durch das Besprühen des Wärmeübertragers 21 vermieden. Die weitere Ausführung der elektrischen rotierenden Maschine 1 entspricht der Ausführung in FIG 1.

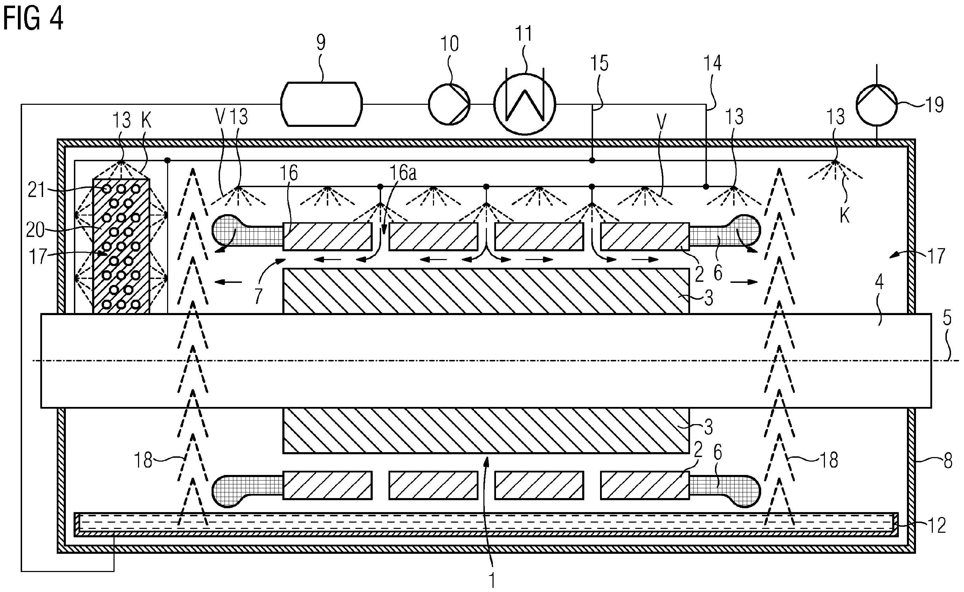

FIG 4 zeigt einen Längsschnitt einer elektrischen rotierenden Maschine 1 mit einer vierten Ausgestaltung eines Kühlkonzepts. Ein Mischkondensationsraum 17 weist einen Füllkörper 20 auf, der, wie in FIG 2 gezeigt, als eine strukturierte Packung ausgeführt ist und durch den die Rohre eines als Rohrbündelwärmeübertrager ausgeführten Wärmeübertragers 21 verlaufen. Die Verdüsungsvorrichtungen 13 sind um den mit dem Wärmeübertrager 21 kombinierten Füllkörper 20 angeordnet und besprühen diesen von mehreren Seiten. Durch die strukturierte Packung wird die Verweilzeit des unterkühlten Kondensationskühlmittels K im Kondensationsraum erhöht, um mehr Kühlmitteldampf in der Mischkondensation zu kondensieren. Durch den Wärmeübertrager 21 findet zusätzlich zur Mischkondensation eine konventionelle Filmkondensation im Mischkondensationsraum 17 statt. Die weitere Ausführung der elektrischen rotierenden Maschine 1 entspricht der Ausführung in FIG 1.

Zusammenfassend betrifft die Erfindung eine elektrische rotierende Maschine 1 mit einem Rotor 3 und einem Stator 2. Um die elektrische rotierende Maschine 1 einfach und effizient nahe des Umgebungsdrucks zu kühlen, wird vorgeschlagen, dass die elektrische rotierende Maschine 1 Mittel zur Verdampfungskühlung von zumindest einem Teil des Stators 2 und/oder des Rotors 3 mit einem Verdampfungskühlmittel V und Mittel zur Mischkondensation des verdampften Verdampfungskühlmittels V mit einem flüssigen Kondensationskühlmittel K aufweist.

## Patentansprüche

1. Elektrische rotierende Maschine (1) mit einem Rotor (3), einem Stator (2) und einem den Rotor (3) und den Stator (2) umgebenden geschlossenen Maschinengehäuse (8),
wobei die elektrische rotierende Maschine (1) Mittel zur Verdampfungskühlung von zumindest einem Teil des Stators (2) und/oder des Rotors (3) mit einem Verdampfungskühlmittel (V) aufweist und
wobei die elektrische rotierende Maschine (1) Mittel zur Mischkondensation des verdampften Verdampfungskühlmittels (V) mit einem flüssigen Kondensationskühlmittel (K) in einem Mischkondensationsraum (17) aufweist,
wobei sich der Mischkondensationsraum (17) innerhalb des Maschinengehäuses (8) an den Stator (2) anschließt, **dadurch gekennzeichnet, dass** der Mischkondensationsraum einen Abscheider (18) aufweist, welcher auf einer dem Stator zugewandten Seite des Mischkondensationsraums angeordnet ist,
wobei durch den Abscheider der Mischkondensationsraum von den zu kühlenden Bauteilen der elektrischen rotierenden Maschine abgegrenzt ist, wobei so keine verdampfungsseitig eingebrachte Kühlmittelflüssigkeit unkontrolliert in den Mischkondensationsraum gelangt, sondern lediglich der gasförmige Kühlmittelstrom in den Mischkondensationsraum strömt.

2. Elektrische rotierende Maschine (1) nach Anspruch 1,
wobei die Mittel zur Verdampfungskühlung mindestens eine Vorrichtung zur Erzeugung eines Kühlmittelnebels, insbesondere eine Verdüsungsvorrichtung (13), umfassen.

3. Elektrische rotierende Maschine (1) nach einem der Ansprüche 1 oder 2,
wobei die Mittel zur Mischkondensation mindestens eine Vorrichtung zur Erzeugung eines Kühlmittelnebels, insbesondere eine Verdüsungsvorrichtung (13), umfassen.

4. Elektrische rotierende Maschine (1) nach einem der vorherigen Ansprüche,
wobei die Mittel zur Mischkondensation zumindest teilweise in einem Mischkondensationsraum (17) angeordnet sind.

5. Elektrische rotierende Maschine (1) nach Anspruch 4, wobei im Mischkondensationsraum (17) ein Wärmeübertrager (21) angeordnet ist.

6. Elektrische rotierende Maschine (1) nach Anspruch 5, wobei der Wärmeübertrager (21) als Rohrbündelwärmeübertrager und/oder Plattenwärmeübertrager ausgestaltet ist.

7. Elektrische rotierende Maschine (1) nach einem der Ansprüche 4 bis 6,
wobei im Mischkondensationsraum (17) ein Füllkörper (20) angeordnet ist.

8. Elektrische rotierende Maschine (1) nach Anspruch 5 und Anspruch 7,
wobei der Wärmeübertrager (21) im Füllkörper (20) angeordnet ist.

9. Elektrische rotierende Maschine (1) nach einem der Ansprüche 4 bis 8,
wobei der Mischkondensationsraum (17) einen Abscheider (18) aufweist, welcher auf einer dem Stator (2) zugewandten Seite des Mischkondensationsraums (17) angeordnet ist.

10. Elektrische rotierende Maschine (1) nach einem der Ansprüche 2 bis 9,
wobei die Verdüsungsvorrichtung (13) zumindest eine Vollkegeldüse aufweist.

11. Verfahren zur Kühlung einer elektrischen rotierenden Maschine (1) mit einem Rotor (3), einem Stator (2) und einem den Rotor (3) und den Stator (2) umgebenden geschlossenen Maschinengehäuse (8),
wobei zumindest ein Teil des Stators (2) und/oder des Rotors (3) mit einem Verdampfungskühlmittel (V) über eine Verdampfungskühlung gekühlt wird und
wobei das verdampfte Verdampfungskühlmittel (V) mit Hilfe eines flüssigen Kondensationskühlmittels (K) über eine Mischkondensation in einem Mischkondensationsraum (17) wieder in einen flüssigen Aggregatszustand überführt wird,
wobei sich der Mischkondensationsraum (17) innerhalb des Maschinengehäuses (8) an den Stator (2) anschließt, **dadurch gekennzeichnet, dass** der Mischkondensationsraum einen Abscheider (18) aufweist, welcher auf einer dem Stator zugewandten Seite des Mischkondensationsraums angeordnet ist,
wobei durch den Abscheider der Mischkondensationsraum von den zu kühlenden Bauteilen der elektrischen rotierenden Maschine abgegrenzt wird, wobei so keine verdampfungsseitig eingebrachte Kühlmittelflüssigkeit unkontrolliert in den Mischkondensationsraum gelangt, sondern lediglich der gasförmige Kühlmittelstrom in den Mischkondensationsraum strömt.

12. Verfahren nach Anspruch 11,
wobei das Verdampfungskühlmittel (V) über eine Vorrichtung zur Erzeugung eines Kühlmittelnebels, insbesondere eine Verdüsungsvorrichtung (13), auf zumindest einen Teil des Stators (2) und/oder des Rotors (3) aufgesprüht wird.

13. Verfahren nach einem der Ansprüche 11 oder 12,
wobei das Kondensationskühlmittel (K) über eine Vorrichtung zur Erzeugung eines Kühlmittelnebels, insbesondere eine Verdüsungsvorrichtung (13), zumindest teilweise in den Mischkondensationsraum (17) gesprüht wird.

14. Verfahren nach einem der Ansprüche 11 bis 13,
wobei das Kondensationskühlmittel (K) zumindest teilweise auf einen Wärmeübertrager (21) aufgesprüht wird.

15. Verfahren nach einem der Ansprüche 11 bis 14,
wobei das Kondensationskühlmittel (K) zumindest teilweise auf einen Rohrbündelwärmeübertrager und/oder einen Plattenwärmeübertrager aufgesprüht wird.

16. Verfahren nach einem der Ansprüche 11 bis 15,
wobei das Kondensationskühlmittel (K) zumindest teilweise auf einen Füllkörper (20) aufgesprüht wird.

## Claims

1. Electric rotating machine (1) comprising a rotor (3), a stator (2) and a closed machine housing (8) enclosing the rotor (3) and the stator (2),
wherein the electric rotating machine (1) comprises means for vaporization cooling of at least a part of the stator (2) and/or the rotor (3) using a vaporization coolant (V), and wherein the electric rotating machine (1) comprises means for mixed condensation of the vaporized vaporization coolant (V) with a liquid condensation coolant (K) in a mixed condensation chamber (17),
wherein the mixed condensation chamber (17) adjoins the stator (2) inside the machine housing (8),
**characterized in that** the mixed condensation chamber comprises a separator (18), which is arranged on a side of the mixed condensation chamber facing toward the stator,
wherein the mixed condensation chamber is delimited from the components to be cooled of the electric rotating machine by the separator, wherein no coolant liquid introduced on the vaporization side enters the mixed condensation chamber in an uncontrolled manner, but rather solely the gaseous coolant flow flows into the mixed condensation chamber.

2. Electric rotating machine (1) according to Claim 1,
wherein the means for vaporization cooling comprise at least one device for generating a coolant mist, in particular an atomizing device (13).

3. Electric rotating machine (1) according to either one of Claims 1 and 2,
wherein the means for mixed condensation comprise at least one device for generating a coolant mist, in particular an atomizing device (13).

4. Electric rotating machine (1) according to any one of the preceding claims,
wherein the means for mixed condensation are at least partially arranged in a mixed condensation chamber (17).

5. Electric rotating machine (1) according to Claim 4, wherein a heat exchanger (21) is arranged in the mixed condensation chamber (17).

6. Electric rotating machine (1) according to Claim 5, wherein the heat exchanger (21) is designed as a pipe bundle heat exchanger and/or plate heat exchanger.

7. Electric rotating machine (1) according to any one of Claims 4 to 6,
wherein a filler body (20) is arranged in the mixed condensation chamber (17).

8. Electric rotating machine (1) according to Claim 5 and Claim 7,
wherein the heat exchanger (21) is arranged in the filler body (20) .

9. Electric rotating machine (1) according to any one of Claims 4 to 8,
wherein the mixed condensation chamber (17) comprises a separator (18), which is arranged on a side of the mixed condensation chamber (17) facing toward the stator (2).

10. Electric rotating machine (1) according to any one of Claims 2 to 9,
wherein the atomizing device (13) comprises at least one full cone nozzle.

11. Method for cooling an electric rotating machine (1) comprising a rotor (3), a stator (2) and a closed machine housing (8) enclosing the rotor (3) and the stator (2), wherein at least a part of the stator (2) and/or the rotor (3) is cooled using a vaporization coolant (V) via vaporization cooling, and
wherein the vaporized vaporization coolant (V) is transferred back into a liquid phase with the aid of a liquid condensation coolant (K) via mixed condensation in a mixed condensation chamber (17),
wherein the mixed condensation chamber (17) adjoins the stator (2) inside the machine housing (8),
**characterized in that** the mixed condensation chamber comprises a separator (18), which is arranged on a side of the mixed condensation chamber facing toward the stator,
wherein the mixed condensation chamber is delimited from the components to be cooled of the electric rotating machine by the separator, wherein no coolant liquid introduced on the vaporization side enters the mixed condensation chamber in an uncontrolled manner, but rather solely the gaseous coolant flow flows into the mixed condensation chamber.

12. Method according to Claim 11,
wherein the vaporization coolant (V) is sprayed via a device for generating a coolant mist, in particular an atomizing device (13), onto at least a part of the stator (2) and/or the rotor (3).

13. Method according to either one of Claims 11 and 12, wherein the condensation coolant (K) is at least partially sprayed into the mixed condensation chamber (17) via a device for generating a coolant mist, in particular an atomizing device (13).

14. Method according to any one of Claims 11 to 13,
wherein the condensation coolant (K) is at least partially sprayed onto a heat exchanger (21).

15. Method according to any one of Claims 11 to 14,
wherein the condensation coolant (K) is at least partially sprayed onto a pipe bundle heat exchanger and/or a plate heat exchanger.

16. Method according to any one of Claims 11 to 15,
wherein the condensation coolant (K) is at least partially sprayed onto a filler body (20).

## Revendications

1. Machine (1) électrique tournante comprenant un rotor (3), un stator (2) et une carcasse (8) de machine fermée entourant le rotor (3) et le stator (2),
dans laquelle la machine (1) électrique tournante a des moyens de refroidissement par évaporation d'au moins une partie du stator (2) et/ou du rotor (3) par du fluide (V) de refroidissement par évaporation et
dans laquelle la machine (1) électrique tournante a des moyens de condensation par mélange du fluide (V) évaporé de refroidissement par évaporation par un fluide (K) liquide de refroidissement par condensation, dans un espace (17) de condensation par mélange, dans lequel l'espace (17) de condensation par mélange se raccorde au stator (2), à l'intérieur de la carcasse (8) de la machine, **caractérisée en ce que**
l'espace de condensation par mélange a un séparateur (18), qui est disposé d'un côté, tourné vers le stator, de l'espace de condensation par mélange,
dans laquelle, par le séparateur, l'espace de condensation par mélange est délimité par rapport aux parties à refroidir de la machine électrique tournante, de manière à ce que du liquide de refroidissement, introduit du côté de l'évaporation, n'arrive pas de manière incontrôlée dans l'espace de condensation par mélange, mais seulement le courant de fluide de refroidissement gazeux passe dans l'espace de condensation par mélange.

2. Machine (1) électrique tournante suivant la revendication 1, dans laquelle les moyens de refroidissement par évaporation comprennent au moins un dispositif de production d'un brouillard de fluide de refroidissement, notamment un dispositif (13) de pulvérisation.

3. Machine (1) électrique tournante suivant l'une des revendications 1 ou 2,
dans laquelle les moyens de condensation par mélange comprennent au moins un dispositif de production d'un brouillard de fluide de refroidissement, notamment un dispositif (13) de pulvérisation.

4. Machine (1) électrique tournante suivant l'une des revendications précédentes,
dans laquelle les moyens de condensation par mélange sont disposés au moins en partie dans un espace (17) de condensation par mélange.

5. Machine (1) électrique tournante suivant la revendication 4, dans laquelle un échangeur (21) de chaleur est disposé dans l'espace (17) de condensation par mélange.

6. Machine (1) électrique tournante suivant la revendication 5, dans laquelle l'échangeur (21) de chaleur est conformé sous la forme d'un échangeur de chaleur à faisceau tubulaire et/ou d'un échangeur de chaleur à plaques.

7. Machine (1) électrique tournante suivant l'une des revendications 4 à 6,
dans laquelle un corps (20) de remplissage est disposé dans l'espace (17) de condensation par mélange.

8. Machine (1) électrique tournante suivant la revendication 5 et revendication 7,
dans laquelle l'échangeur (21) de chaleur est disposé dans le corps (20) de remplissage.

9. Machine (1) électrique tournante suivant l'une des revendications 4 à 8,
dans laquelle l'espace (17) de condensation par mélange a un séparateur (18), qui est disposé du côté, tourné vers le stator (2), de l'espace (17) de condensation par mélange.

10. Machine (1) électrique tournante suivant l'une des revendications 2 à 9,
dans laquelle le dispositif (13) de pulvérisation a au moins une buse à cône plein.

11. Procédé de refroidissement d'une machine (1) électrique tournante, comprenant un rotor (3), un stator (2) et une carcasse (8) de machine fermée entourant le rotor (3) et le stator (2), dans lequel on refroidit au moins une partie du stator (2) et/ou du rotor (3) par un fluide (V) de refroidissement par évaporation, par un refroidissement par évaporation et
dans lequel on retransforme à l'état liquide le fluide (V) de refroidissement évaporé par évaporation à l'aide d'un fluide (K) liquide de refroidissement de condensation, par une condensation par mélange dans un espace (17) de condensation par mélange,
dans lequel l'espace (17) de condensation par mélange se raccorde au stator (2) à l'intérieur de la carcasse (8) de la machine, l'espace de condensation par mélange a un séparateur (18), qui est disposé d'un côté, tourné vers le stator, de l'espace de condensation par mélange,
dans lequel, par le séparateur, l'espace de condensation par mélange est délimité par rapport aux parties à refroidir de la machine électrique tournante, de manière à ce que du liquide de refroidissement, introduit du côté de l'évaporation, n'arrive pas de manière incontrôlée dans l'espace de condensation par mélange, mais seulement le courant de fluide de refroidissement gazeux passe dans l'espace de condensation par mélange.

12. Procédé suivant la revendication 11,
dans lequel on pulvérise le fluide (V) de refroidissement par de refroidissement, notamment par un dispositif (13) de pulvérisation sur une partie du stator (2) et/ou du rotor (3).

13. Procédé suivant l'une des revendications 11 ou 12,
dans lequel on pulvérise le fluide (K) de refroidissement par condensation par un dispositif de production d'un brouillard de fluide de refroidissement, notamment un dispositif (13) de pulvérisation, au moins en partie, dans l'espace (17) de condensation par mélange.

14. Procédé suivant l'une des revendications 11 à 13,
dans lequel on pulvérise le fluide (K) de refroidissement par condensation, au moins en partie, sur un échangeur (21) de chaleur.

15. Procédé suivant l'une des revendications 11 à 14,
dans lequel on pulvérise le fluide (K) de refroidissement par condensation, au moins en partie, sur un échangeur de chaleur à faisceau tubulaire et/ou sur un échangeur de chaleur à plaques.

16. Procédé suivant l'une des revendications 11 à 15,
dans lequel on pulvérise le fluide (K) de refroidissement par condensation, au moins en partie, sur un corps (20) de remplissage.
